Europäisches Patentamt

(19) European Patent Office

Office européen des brevets

(11) Publication number: **0 288 592**
**B1**

## (12) EUROPEAN PATENT SPECIFICATION

(45) Date of publication of the patent specification:
**29.08.90**

(51) Int. Cl.⁵: **B26D 7/30, A22C 25/18**

(21) Application number: **87106205.5**

(22) Date of filing: **29.04.87**

(54) Apparatus for grading meat or fish.

(43) Date of publication of application:
**02.11.88 Bulletin 88/44**

(45) Publication of the grant of the patent:
**29.08.90 Bulletin 90/35**

(84) Designated Contracting States:
**BE CH DE FR GB IT LI SE**

(56) References cited:
**EP-A- 0 235 322**
**DE-A- 1 432 518**
**FR-A- 2 572 004**
**GB-A- 2 149 650**
**US-A- 4 557 019**

(73) Proprietor: FRISCO-FINDUS AG, Industriestrasse,
CH-9400 Rorschach(CH)

(72) Inventor: Akesson, Yngve R., 37, Bankogardsgatan,
S-Halsingborg(SE)
Inventor: Olofsson, Mats, Langgatan 10,
S-265 00 Astorp(SE)

ACTORUM AG

**Description**

The present invention relates to an apparatus and a process for the automatic cutting of meat or fish to produce portions of a predetermined weight and length.

In the production of packaged frozen meat or fish products, it is important that the weight of the portions is controlled as accurately as possible, otherwise the weights will vary at the time of filling the packages resulting in certain disadvantages: underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semiautomatic cutting and weighing of portions have been described but these generally involve the use of very complex machinery. For example, the use of photoelectric sensors has been proposed to detect the linear measurements of fish but since not the length, but also the breadth and thickness vary appreciably, this method would not lead to the cutting of portions with an accurate constant weight. GB-A 2 149 650 and US-A 4 557 019 each describe an apparatus for cutting a product into portions of a preselected weight which makes use of optical sensors for measuring the area and shape respectively of the product.

In our co-pending European Patent Application EP-A 0 235 322 failing under the terms of Article 54 (3) we have described and claimed an apparatus and process for the automatic cutting of meat or fish material to produce portions of a predetermined constant weigth, comprising a pair of adjacent parallel conveyors suitable for transporting a meat or fish material lying partly on each conveyor, a weighing machine and a movable cutting device wherein the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors, the direction and distance of the transverse movement being controlled by the weight recorded on the weighing machine, and then to cut the material parallel to the direction of movement.

We have now developed an improvement to this apparatus and method which, surprisingly, enables fish and meat pieces having widely varying thicknesses to be cut automatically to a predetermined constant weight and length and which may be graded in size groups.

The present invention provides a process for the automatic cutting of meat or fish material by a fixed or movable cutting device to produce portions of a predetermined weight and length which comprises placing a meat or fish material onto the infeed end of at least two adjacent parallel conveyors travelling in the same direction substantially at the same speed so that the material lies partly on at least two conveyors, at least part of each conveyor being adapted to form the load-bearing platform of a weighing machine, the cutting device being positioned downstream of the weighing machines, the weighing machines record the weight of the material advancing on the load-bearing platforms, the recorded weight measurement is fed to a computer which is preprogrammed for at least one product factor defining a specified weight for a specified length and which calculates, from the recorded weight measurement, a weight factor defining a specified weight for a specified length of material, compares the actual weight factor calculated with the preprogrammed product factor and then actuates either the cutting device, when movable, to move transversely to the direction of movement of the conveyor or, when the cutting device is fixed, a means positioned between the weighing machines and the cutting device to cause the material to move transversely relative to the longitudinal direction of movement of the parallel conveyors, the direction and distance of the transverse movement of the cutting device or the means for causing the material to move transversely being controlled by the comparison of the actual weight factor calculated with the preprogrammed product factor, after which the material is cut by the cutting device in a direction parallel to the longitudinal direction of movement of the parallel conveyors.

The computer is preferably preprogrammed for more than one product factor and afterwards, the cut pieces may be graded by length by a means actuated by the computer.

The meat or fish material is conveniently placed on the apparatus manually so that the desired approximate weight of that part of the material which will form the portion having a predetermined weight lies substantially on the parallel conveyors adapted to form the load-bearing platforms of the weighing machines, conveniently by ensuring that the material contacts a fixed guide fitted in the appropriate position above the conveyors.

In addition the present invention provides an apparatus for the automatic cutting of meat or fish material to produce portions of a predetermined weight and length, comprising at least two adjacent parallel conveyors suitable for transporting a meat or fish material lying partly on each conveyor, at least two adjacent parallel weighing machines, a computer and a fixed or movable cutting device positioned downstream of the weighing machines wherein the computer is preprogrammed for at least one product factor defining a specified weight for a specified length, the parallel conveyors are adapted to travel in the same direction at substantially the same speed and that at least part of each of the parallel conveyors is adapted to form the load-bearing platform of one of the weighing machines, each weighing machine being adapted to weigh the material lying on the load-bearing platform and to feed the recorded weight to the computer which is adapted to calculate a weight factor defining a specified weight for a specified length of material, the cutting device when movable being adapted to move transversely to the direction of movement of the conveyors, and when fixed there being provided means, positioned between the weighing machines and the cutting device, for causing the material to move transversely relative to the longitudinal direction of movement, the direction and distance of the transverse movement of the cutting device or the means for causing the material to move transversely being controlled by a comparison of the actual weight factors calculated with the preprogrammed product factors, the cutting device being adapted to cut the material parallel to the longitudinal direction of movement of the conveyors.

The weight factors depend on the width, thickness and density of the meat or fish material lying on a particular weighing machine.

The parallel conveyors conveniently comprise endless belts. The parallel conveyors conveniently comprise a plurality of endless belts each of which is conveniently fixed to a respective weighing machine via the axles of the rollers.

The adjacent parallel conveyors are preferably separated by a short distance so that there is a gap between them. The presence of this gap helps to eliminate the weight influence caused by any vertical or horizontal change of distance, or any speed difference between the two conveyors. The product has a natural elasticity and the elastic zone of the product in the gap between the conveyors helps to eliminate this weight influence.

Generally, the width of the gap is as small as possible and may conveniently be from about 5 to 20 mm and preferably from 7.5 to 15 mm. The weighing machines are conveniently of the type consisting of continuously working scales based on load cells, or they may be spring balances. We have found, surprisingly, that the weighing machines give a reliable reading of the weight of that part of the meat or fish material on the load-bearing platform. Since the widths of the load-bearing platforms and the width of the gaps are known, the weight recorded by each weighing machine can be used to calculate the weight factors by the computer which compares the weight factors with the preprogrammed product factor and actuates the cutting device or the means for causing the meat or fish material to move transversely so that either the cutting device or the meat or fish material travels an appropriate distance in the direction required so that the desired weight and length may be cut by the cutting device. It should be understood that the preprogrammed product factor is a range of weights and lengths conveniently spanning up to 10% on either side of the desired weight and length. Preferably the computer is preprogrammed for more than one product factor, thus enabling portions of different weight and length specifications to be obtained at the same time.

The major advantage in having at least two parallel weighing machines is that immediate information can be obtained about the weight distribution along the meat or fish pieces and by means of a computer it will be possible to select the optimal cutting pattern for each piece of product at a very high speed. The number of parallel weighing machines may conveniently be from 3 to 10, preferably from 4 to 6. If desired, a second set of adjacent parallel conveyors adapted to form the load-bearing platforms of weighing machines may be present upstream of the cutting device and downstream of, and transversely displaced in relation to, the adjacent parallel conveyors hereinbefore described. The transverse displacement is preferably less than the width of one conveyor and conveniently 25% to 75% of the width. This makes it possible to record the weight for less length of material.

The means for causing the material to move transversely relative to the longitudinal direction of movement may be a conveyor adapted to travel longitudinally and also adapted to move transversely relative to the longitudinal direction of movement. The conveyor adapted to move transversely may conveniently be provided by a single endless conveyor belt capable of travelling longitudinally but also provided with means to move transversely in either direction, which may be actuated by a step-motor.

When movable, the cutting device is adapted to move transversely in either direction relative to the longitudinal movement of the fish or meat material on the conveyors. Although any kind of cutting device may be used, for example, jet cutting, a circular saw is preferred.

The movement of the means for causing the material to move transversely relative to the longitudinal direction of movement and of the cutting device may be achieved by a step motor which causes the part to move in either direction transversely before stopping in the appropriate position so that the meat or fish material is cut at the correct point by the cutting device.

The present invention is applicable to meat and fish materials of all sizes and shapes, for example cod or salmon. The invention is particularly suitable for cutting cod tails having a weight between about 50 g to 175 g, but is also applicable for cutting fillets weighing up to 700 g.

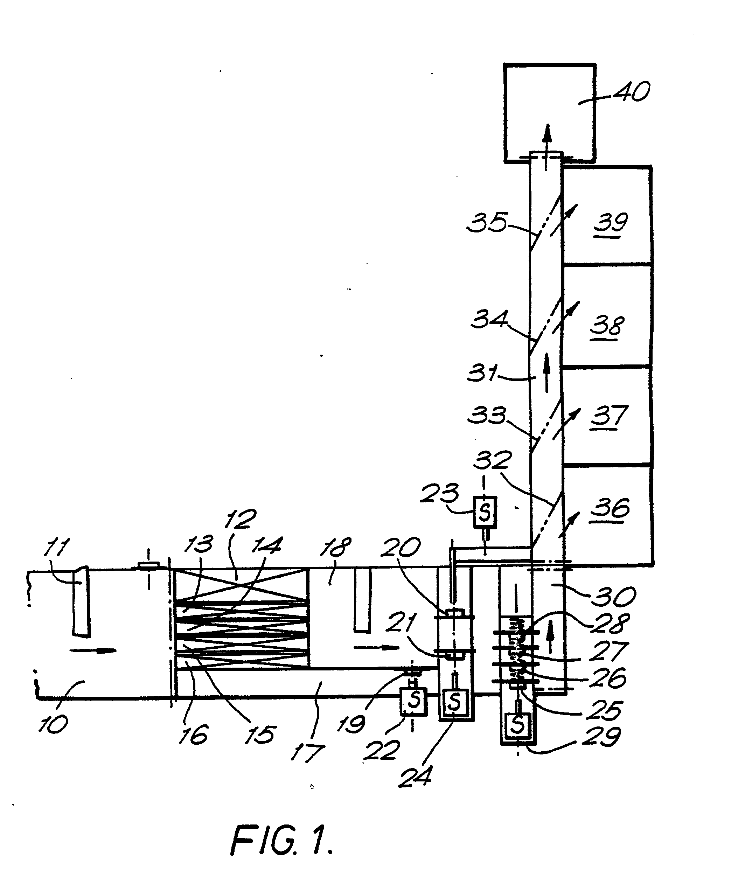

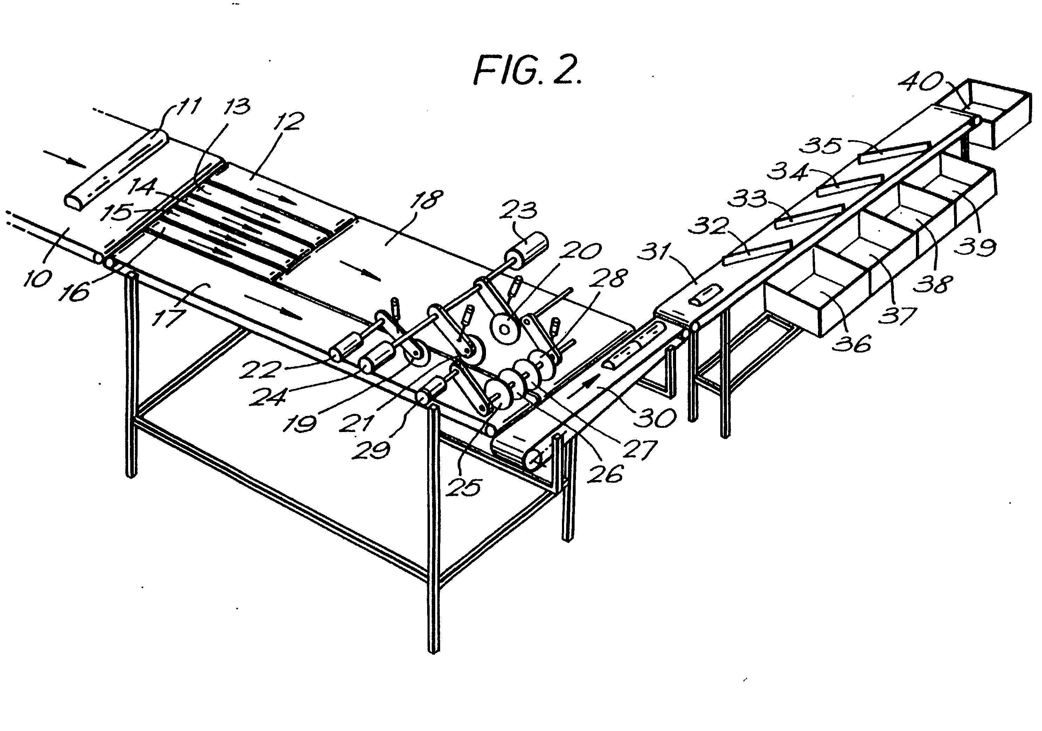

The present invention will now be illustrated by way of example with reference to the accompanying drawing in which Figure 1 represents a diagrammatic top plan view of an apparatus having five parallel weighing machines and Figure 2 represents a perspective view of the same apparatus.

Referring to the drawings, the apparatus comprises an infeed conveyor 10 on which rests the back piece of a pretrimmed fillet of cod 11, parallel endless belts 12, 13, 14, 15, 16 and 17 of which each of belts 12, 13, 14, 15, 16 forms the load-bearing platform of a weighing machine respectively. Belt 12 is 100 mm wide and belts 13, 14, 15 and 16 are 50 mm wide. There is a gap of 10 mm between each belt. Downstream of the weighing machines is a conveyor 18 and downstream of conveyor 18 are cutting knives 19, 20 and 21 positioned by step-motors 22, 23 and 24 respectively. Downstream of cutting knives 20 and 21 are chunk knives 25, 26, 27 and 28 activated by step-motor 29. Downstream of the chunk knives is a conveyor 30 and an accelerating conveyor belt 31 provided with pushers 32, 33, 34 and 35 activated by a computer (not shown) and below each of which is a container 36, 37, 38 and 39 respectively and at the downstream end of the belt 31 is a further container 40.

In operation, the back pieces of the pretrimmed fillets of cod 11 are placed manually on infeed conveyor belt 10 and positioned so that one end contacts an adjustable guide bar (not shown) located above the edge of the infeed conveyor belt 10 at its left hand side relative to its direction of motion indicated by the arrow. The back pieces pass in the direction of the arrow towards the adjacent parallel belts. The back pieces advance over the load-bearing platforms of the endless belts and the weights of that part of the back piece on each belt are recorded and these weights, together with the lengths of the back piece lying on each belt, are fed to a computer (not shown) which calculates the weight factor for each belt i.e. the weight/length. The computer is preprogrammed for four product factors and by comparing the actual obtained weight factors along the back piece with the preprogrammed product factors, if any combination of weight factors matches one of the preprogrammed product factors, the computer calculates the position where the cutting is required and actuates at least one of the step motors 22, 23 or 24 to cause the appropriate cutting knife 19, 20 or 21 to move transversely to the longitudinal direction of movement of the back piece until the knife is in the appropriate position for cutting the back piece advancing on conveyor belt 18. Once the back piece has been cut, the desired cut product advances along the conveyor 30 and the accelerating conveyor 31 where a further signal from the computer actuates the appropriate pusher 32, 33, 34 or 35 to close so causing the cut fillet to fall into the appropriate container 36, 37, 38, 39 or 40.

As a specific example, the computer was preprogrammed for four different product factors as follows:

| Product weight | Product length | Product factor |
|---|---|---|
| 150 g ± 10 g | 140–150 mm | 1.06897 ± 0.06897 |
| 120 g ± 10 g | 125–135 mm | 0.96154 ± 0.07692 |
| 88 g ± 2 g | 100–130 mm | 0.77391 ± 0.01739 |
| 80 g ± 10 g | 90–110 mm | 0.85 ± 0.1 |

For example if the length of the back piece of the cod fillet is 300 mm it is possible to produce two 150 gram loins if the product factor is high enough. If the product factor is low, it is possible to cut three smaller pieces e.g. each weighing 80 g. In addition, it is possible to cut combinations of larger or smaller loins in accordance with the obtained weight factors along the fillet of cod.

If the obtained weight factors do not match any of the preprogrammed product factors, the cutting knives 19, 20 and 21 are not actuated and, in this case, the chunk knives 25, 26, 27 and 28 are actuated by the computer via the step motor 29 to cut the back piece into chunks which are collected either in a container or on a conveyor belt for transport to the freezer.

## Claims

1. A process for the automatic cutting of meat or fish material (11) by a fixed or movable cutting device (19, 20, 21) to produce portions of a predetermined weight and length which comprises placing a meat or fish material (11) onto the infeed end (10) of at least two adjacent parallel conveyors (12, 13, 14, 15, 16, 17) travelling in the same direction substantially at the same speed so that the material (11) lies partly on at least two conveyors, at least part of each conveyor (12, 13, 14, 15, 16) being adapted to form the load-bearing platform of a weighing machine the cutting device (19, 20, 21) being positioned downstream of the weighing machines, the weighing machines record the weight of the material (11) advancing on the load-bearing platforms, the recorded weight measurement is fed to a computer which is preprogrammed for at least one product factor defining a specific weight for a specified length of material, compares the actual weight factor calculated with the preprogrammed product factor, and then actuates either the cutting device (19, 20, 21), when movable, to move transversely to the direction of movement of the conveyor or, when the cutting device (19, 20, 21) is fixed, a means positioned between the weighing machines and the cutting device to cause the material (11) to move transversely relative to the longitudinal direction of movement of the parallel conveyors (12, 13, 14, 15, 16, 17), the direction and distance of the transverse movement of the cutting device (19, 20, 21) or the means for causing the material to move transversely being controlled by the comparison of the actual weight factor calculated with the preprogrammed product factor, after which the material is cut by the cutting device (19, 20, 21) in a direction parallel to the longitudinal direction of movement of the parallel conveyors (12, 13, 14, 15, 16, 17).

2. A process according to claim 1 characterised in that afterwards the cut pieces are graded by length.

EP 0 288 592 B1

3. An apparatus for carrying out the process of claim 1, comprising at least two adjacent parallel conveyors (12, 13, 14, 15, 16, 17) suitable for transporting a meat or fish material (11) lying partly on each conveyor, at least two adjacent parallel weighing machines, a computer and a fixed or movable cutting device (19, 20, 21) positioned downstream of the weighing machines wherein the computer is preprogrammed for at least one product factor defining a specified weight for a specified length, the parallel conveyors (12, 13, 14, 15, 16, 17) are adapted to travel in the same direction at substantially the same speed and that at least part of each of the parallel conveyors (12, 13, 14, 15, 16) is adapted to form the load-bearing platform of one of the weighing machines, each weighing machine being adapted to weigh the material lying on the load-bearing platform and to feed the recorded weight to the computer which is adapted to calculate a weight factor defining a specified weight for a specified length of material, the cutting device (19, 20, 21) when movable being adapted to move transversely to the direction of movement of the conveyors (12, 13, 14, 15, 16, 17), and when fixed there being provided means, positioned between the weighing machines and the cutting device (19, 20, 21), for causing the material (11) to move transversely relative to the longitudinal direction of movement, the direction and distance of the transverse movement of the cutting device (19, 20, 21) or the means for causing the material to move transversely being controlled by a comparison of the actual weight factors calculated with the preprogrammed product factors, the cutting device (19, 20, 21) being adapted to cut the material (11) parallel to the longitudinal direction of movement of the conveyors (12, 13, 14, 15, 16, 17).

4. An apparatus according to claim 3 characterised in that the parallel conveyors (12, 13, 14, 15, 16) comprise endless belts each of which is fixed to a weighing machine via the axles of the rollers.

5. An apparatus according to claim 3 characterised in that the parallel conveyors, (12, 13, 14, 15, 16, 17) are separated from each other by a distance from 5 to 20 mm.

6. An apparatus according to claim 3 characterised in that the weighing machines are of the type consisting of continuously working scales based on load cells.

7. An apparatus according to claim 3 characterised in that the number of parallel weighing machines is from 4 to 6.

8. An apparatus according to claim 3 characterised in that the means for causing the material to move transversely relative to the longitudinal direction of movement is a conveyor adapted to travel longitudinally and also adapted to move transversely relative to the longitudinal direction of movement.

9. An apparatus according to claim 3 characterised in that it comprises means for grading the cut pieces by length.

10. An apparatus according to claim 3 characterised in that a second set of adjacent parallel conveyors adapted to form the load-bearing platforms of weighing machines is present upstream of the cutting device and downstream of, and transversely displaced in relation to, the adjacent parallel conveyors defined in claim 3.

**Patentansprüche**

1. Verfahren zum automatischen Schneiden von Fleisch- oder Fischmaterial (11) durch eine feststehende oder bewegliche Schneidvorrichtung (19, 20, 21) zur Herstellung von Portionen mit einem vorgegebenen Gewicht und einer vorgegebenen Länge, das umfaßt das Aufgeben eines Fleisch- oder Fischmaterials (11) auf das Zuführungsende (10) von wenigstens zwei benachbarten parallelen Förderern (12, 13, 14, 15, 16, 17), die sich im wesentlichen mit der gleichen Geschwindigkeit in die gleiche Richtung bewegen, so daß das Material (11) teilweise auf wenigstens zwei Förderern aufliegt, wobei wenigstens ein Teil eines jeden Förderers (12, 13, 14, 15, 16) so ausgebildet ist, daß er die Wägebrücke einer Wägemaschine bildet, und wobei die Schneidvorrichtung (19, 20, 21) stromab hinter den Wägemaschinen angeordnet ist, die Wägemaschinen das Gewicht des Materials (11), das sich auf den Wägebrücken vorwärtsbewegt, aufzeichnen und das aufgezeichnete Meßergebnis für das Gewicht einem Computer zuführen, der für wenigstens einen Produktfaktor vorprogrammiert ist, der ein bestimmtes Gewicht für eine bestimmte Länge des Materials definiert, den tatsächlichen errechneten Gewichtsfaktor mit dem vorgegebenen Produktfaktor vergleicht und dann entweder die Schneidvorrichtung (19, 20, 21) in Betrieb setzt, wenn diese beweglich ist, so daß sie sich quer zur Bewegungsrichtung des Förderers bewegt, oder dann, wenn die Schneidvorrichtung (19, 20, 21) feststeht, eine Vorrichtung in Betrieb setzt, die zwischen den Wägemaschinen und der Schneidvorrichtung angeordnet ist, um das Material (11) quer zur Längs-Bewegungsrichtung der parallelen Förderer (12, 13, 14, 15, 16, 17) zu bewegen, wobei die Richtung und der Weg der Querbewegung der Schneidvorrichtung (19, 20, 21) oder der Einrichtung zur Bewegung des Materials in Querrichtung gesteuert werden durch den Vergleich des tatsächlichen errechneten Gewichtsfaktors mit dem vorprogrammierten Produktfaktor, wonach das Material von der Schneidvorrichtung (19, 20, 21) in einer Richtung parallel zur Längsrichtung der Bewegung der parallelen Förderer (12, 13, 14, 15, 16, 17) geschnitten wird.

2. Verfahren nach Anspruch 1, dadurch gekennzeichnet, daß anschließend die geschnittenen Stücke anhand ihrer Länge sortiert werden.

3. Vorrichtung zur Durchführung des Verfahrens nach Anspruch 1, mit wenigstens zwei benachbarten parallelen Förderern (12, 13, 14, 15, 16, 17), die für den Transport eines Fleisch- oder Fischmaterials (11), das teilweise auf jedem Förderer aufliegt, geeignet sind, wenigstens zwei benachbarten parallelen Wägemaschinen, einem Computer und einer feststehenden oder beweglichen Schneidvorrichtung (19, 20, 21), die stromab hinter den Wägemaschinen angeordnet ist, worin der Computer für wenigstens einen Produktfaktor vorprogrammiert ist, der ein bestimmtes Gewicht für eine bestimmte Länge definiert, die parallelen Förderer (12, 13, 14, 15, 16, 17) so ausgebildet sind, daß sie sich mit im wesentlichen der gleichen Geschwindigkeit in die gleiche Richtung bewegen, und worin wenigstens ein Teil eines jeden der parallelen Förderer (12, 13, 14, 15, 16) so ausgebildet ist, daß er die Wägebrücke einer der Wägemaschinen bildet, wobei jede Wägemaschine so ausgebildet ist, daß sie das auf der Wägebrücke liegende Material wägt und das aufgezeichnete Gewicht dem Computer zuführt, der so ausgebildet ist, daß er einen Gewichtsfaktor errechnet, der ein bestimmtes Gewicht für eine bestimmte Materiallänge definiert, und wobei die Schneidvorrichtung (19, 20, 21), wenn sie beweglich ist, so ausgebildet ist, daß sie sich quer zur Bewegungsrichtung der Förderer (12, 13, 14, 15, 16, 17) bewegt und daß dann, wenn sie feststehend ausgebildet ist, eine Einrichtung vorgesehen ist, die zwischen den Wägemaschinen und der Schneidevorrichtung (19, 20, 21) angeordnet ist und das Material (11) quer zur Längs-Bewegungsrichtung bewegt, wobei die Richtung und der Weg der Querbewegung der Schneidvorrichtung (19, 20, 21) oder der Einrichtung zur Erzeugung der Querbewegung des Materials durch einen Vergleich der tatsächlich errechneten Gewichtsfaktoren mit den vorprogrammierten Produktfaktoren gesteuert werden, wobei die Schneidvorrichtung (19, 20, 21) so ausgebildet ist, daß sie das Material (11) parallel zur Längsrichtung der Bewegung der Förderer (12, 13, 14, 15, 16, 17) schneidet.

4. Vorrichtung nach Anspruch 3, dadurch gekennzeichnet, daß die parallelen Förderer (12, 13, 14, 15, 16) Endlosbänder aufweisen, die jeweils über die Rollenachsen an einer Wägemaschine befestigt sind.

5. Vorrichtung nach Anspruch 3, dadurch gekennzeichnet, daß die parallelen Förderer (12, 13, 14, 15, 16, 17) voneinander durch einen Abstand von 5 bis 20 mm getrennt sind.

6. Vorrichtung nach Anspruch 3, dadurch gekennzeichnet, daß die Wägemaschinen von dem Typ sind, der aus einer kontinuierlich arbeitenden Waage auf der Basis von Meßdosen besteht.

7. Vorrichtung nach Anspruch 3, dadurch gekennzeichnet, daß die Zahl der parallelen Wägemaschinen von 4 bis 6 beträgt.

8. Vorrichtung nach Anspruch 3, dadurch gekennzeichnet, daß die Einrichtung zur Bewegung des Materials in Querrichtung zur Längs-Bewegungsrichtung ein Förderer ist, der so ausgebildet ist, daß er in Längsrichtung läuft und sich auch quer zu der Längs-Bewegungsrichtung bewegen kann.

9. Vorrichtung nach Anspruch 3, dadurch gekennzeichnet, daß sie eine Einrichtung zum Sortieren der geschnittenen Stücke nach der Länge umfaßt.

10. Vorrichtung nach Anspruch 3, dadurch gekennzeichnet, daß ein zweiter Satz von benachbarten parallelen Förderern, die so ausgebildet sind, daß sie die Wägebrücken von Wägemaschinen bilden, stromauf vor der Schneidvorrichtung und stromab hinter den benachbarten parallelen Förderern gemäß Anspruch 3 sowie in Querrichtung gegenüber diesen versetzt angeordnet vorhanden ist.

**Revendications**

1. Procédé pour la coupe automatique de viande ou de poisson (11) par un dispositif fixe ou mobile (19, 20, 21) de coupe afin de produire des portions d'un poids et d'une longueur prédéterminés, qui consiste à placer de la viande ou du poisson (11) sur l'extrémité de chargement (10) d'au moins deux transporteurs parallèles adjacents (12, 13, 14, 15, 16, 17) se déplaçant dans la même direction, sensiblement à la même vitesse, afin que la matière (11) s'étende partiellement sur au moins deux transporteurs, au moins une partie de chaque transporteur (12, 13, 14, 15, 16) étant conçue pour former la plate-forme de charge d'une machine de pesage, le dispositif de coupe (19, 20, 21) étant placé en aval des machines de pesage, les machines de pesage enregistrent le poids de la matière (11) avançant sur les plates-formes de charge, la mesure de poids enregistrée est transmise à un calculateur qui est préprogrammé pour au moins un facteur de produit définissant un poids spécifique pour une longueur de matière spécifiée, qui compare le facteur de poids réel calculé avec le facteur de produit préprogrammé, puis qui actionne soit le dispositif de coupe (19, 20, 21), lorsqu'il est mobile, pour le déplacer transversalement à la direction du mouvement du transporteur, soit, lorsque le dispositif de coupe (19, 20, 21) est fixe, un moyen placé entre les machines de pesage et le dispositif de coupe pour amener la matière (11) à se déplacer transversalement par rapport à la direction longitudinale du mouvement des transporteurs parallèles (12, 13, 14, 15, 16, 17), la direction et la distance du mouvement transversal du dispositif de coupe (19, 20, 21) ou du moyen destiné à amener la matière à se déplacer transversalement étant commandées par la comparaison du facteur de poids réel calculé avec le facteur de produit préprogrammé, après quoi la matière est coupée par le dispositif de coupe (19, 20, 21) dans une direction parallèle à la direction longitudinale du mouvement des transporteurs parallèles (12, 13, 14, 15, 16, 17).

2. Procédé selon la revendication 1, caractérisé en ce que, ensuite, les morceaux coupés sont classés en longueur.

3. Appareil pour la mise en œuvre du procédé de la revendication 1, comprenant au moins deux transporteurs parallèles adjacents (12, 13, 14, 15, 16, 17) convenant au transport de viande ou de poisson (11) s'étendant partiellement sur chaque transporteur, au moins deux machines de pesage parallèles adjacentes, un calculateur et un dispositif de coupe fixe ou mobile (19, 20, 21) placé en aval des machines de pesage, le calculateur étant préprogrammé pour au moins un facteur de produit définissant un poids spécifié pour une longueur spécifiée, les transporteurs parallèles (12, 13, 14, 15, 16, 17) étant conçus pour se déplacer dans la même direction, sensiblement à la même vitesse, et au moins une partie de chacun des transporteurs parallèles (12, 13, 14, 15, 16) étant conçue pour former la plate-forme de charge de l'une des machines de pesage, chaque machine de pesage étant conçue pour peser la matière s'étendant sur la plate-forme de charge et pour transmettre le poids enregistré au calculateur qui est conçu pour calculer un facteur de poids définissant un poids spécifié pour une longueur de matière spécifiée, le dispositif de coupe (19, 20, 21), lorsqu'il est mobile, étant conçu pour se déplacer transversalement à la direction du mouvement des·transporteurs (12, 13, 14, 15, 16, 17) et, lorsqu'il est fixe, un moyen étant prévu, placé entre les machines de pesage et le dispositif de coupe (19, 20, 21), pour amener la matière (11) à se déplacer transversalement par rapport à la direction longitudinale de mouvement, la direction et la distance du mouvement transversal du dispositif de coupe (19, 20, 21) ou du moyen destiné à amener la matière à se déplacer transversalement, étant commandées par une comparaison des facteurs de poids réel calculés avec les facteurs de produit préprogrammés, le dispositif de coupe (19, 20, 21) étant conçu pour couper la matière (11) parallèlement à la direction longitudinale du mouvement des transporteurs (12, 13, 14, 15, 16, 17).

4. Appareil selon la revendication 3, caractérisé en ce que les transporteurs parallèles (12, 13, 14, 15, 16) comprennent des bandes sans fin dont chacune est fixée à une machine de pesage au moyen des axes des rouleaux.

5. Appareil selon la revendication 3, caractérisé en ce que les transporteurs parallèles (12, 13, 14, 15, 16, 17) sont séparés les uns des autres d'une distance de 5 à 20 mm.

6. Appareil selon la revendication 3, caractérisé en ce que les machines de pesage sont du type constitué de bascules travaillant en continu, reposant sur des cellules de charge.

7. Appareil selon la revendication 3, caractérisé en ce que le nombre de machines de pesage en parallèle est de 4 à 6.

8. Appareil selon la revendication 3, caractérisé en ce que le moyen destiné à amener la matière à se déplacer transversalement par rapport à la direction longitudinale de mouvement est un transporteur conçu pour se déplacer longitudinalement et également conçu pour se déplacer transversalement par rapport à la direction longitudinale du mouvement.

9. Appareil selon la revendication 3, caractérisé en ce qu'il comprend des moyens destinés à classer en longueur les morceaux coupés.

10. Appareil selon la revendication 3, caractérisé en ce qu'un second jeu de transporteurs parallèles adjacents, conçus pour former les plates-formes de charge de machines de pesage, est présent en amont du dispositif de coupe et en aval des, ou décalé transversalement par rapport aux, transporteurs parallèles adjacents définis dans la revendication 3.

FIG. 1.

FIG. 2.